# EUROPÄISCHE PATENTSCHRIFT

(11) **EP 3 298 292 B1**
(45) Veröffentlichungstag und Bekanntmachung des Hinweises auf die Patenterteilung: **12.06.2024**
(21) Anmeldenummer: 16703991.6
(22) Anmeldetag: 12.02.2016
(51) Int. Cl.: F16C 32/04, F16C 39/02, F16C 17/10

(54) **RADIAL-AXIAL-MAGNETLAGER MIT INTEGRIERTEM FANGLAGER UND VERFAHREN ZUM BETRIEB DES MAGNETLAGERS**
RADIAL-AXIAL MAGNETIC BEARING WITH INTEGRATED TOUCH-DOWN BEARING AND METHOD OF OPERATING THE MAGNETIC BEARING
PALIER MAGNÉTIQUE RADIAL-AXIAL AVEC PALIER DE SECOURS INTÉGRÉ ET PROCÉDÉ D'OPÉRATION DU PALIER MAGNÉTIQUE

(30) Priorität: 21.05.2015 DE 102015108081
(43) Veröffentlichungstag der Anmeldung: 28.03.2018
(73) Patentinhaber: thyssenkrupp rothe erde Germany GmbH, 44137 Dortmund (DE); ThyssenKrupp Transrapid GmbH, 34127 Kassel (DE); thyssenkrupp AG, 45143 Essen (DE)
(72) Erfinder: PANTKE, Klaus, 59755 Arnsberg (DE); ZHENG, Qinghua, 80331 München (DE); LAMPERSBERGER, Erhard, 80999 München (DE); LÜNEBURG, Bernd, 45481 Mülheim an der Ruhr (DE); ROLLMANN, Jörg, 59558 Lippstadt (DE); DIGNATH, Florian, 81249 München (DE)
(74) Vertreter: thyssenkrupp Intellectual Property GmbH
(86) Internationale Anmeldenummer: PCT/EP2016/052952
(87) Internationale Veröffentlichungsnummer: WO 2016/184582

(56) Entgegenhaltungen:
- EP-A1- 2 154 386
- EP-A1- 2 808 572
- EP-A2- 2 557 278
- WO-A2-2009/021721
- DE-A1- 2 163 199
- DE-A1- 2 803 474
- DE-A1- 2 842 165

## Beschreibung

### Stand der Technik

Die vorliegende Erfindung betrifft ein Magnetlager und ein Verfahren zum Betrieb eines Magnetlagers.

Magnetlager sind aus dem Stand der Technik hinlänglich bekannt und ermöglichen das kontaktlose Anordnen zweier Lagerteile zueinander. Insbesondere lässt sich angesichts der verschwindend geringen Reibung zwischen den Lagerteilen hierbei ein Rotor bereitstellen, mit dem sich Rotationsgeschwindigkeiten realisieren lassen, die höher sind als solche, die üblicherweise mit Gleit- oder Wälzlagern erzielbar sind.

Zur Realisierung eines Magnetlagers werden typischerweise Magnete, beispielsweise Permanentmagnete und/oder Spulen, in den Rotor und einen Stator des Magnetlagers integriert. Spulen lassen sich dabei in der Regel durch die Beaufschlagung mit einer elektrischen Spannung einfach betreiben. Durch die Nutzung von mit einer elektrischen Spannung versorgten Spulen besteht, beispielsweise bei einem Stromausfall, die Gefahr, dass der Rotor aus seiner kontaktlosen Anordnung zum Stator freigelassen wird und dabei das Lager zerstört. Zu Schutzzwecken weist das Magnetlager daher üblicherweise eine Fangvorrichtung auf, die in einem solchen Szenario den Rotor fängt.

In der Regel ist diese Fangvorrichtung bauraumfüllend, insbesondere zwischen dem Außenring und dem Innenring, angeordnet, was die Integration in andere Baueinheiten erschwert. Außerdem ist der hohe Energiebedarf für ein Magnetlager in vielen Fällen dafür ausschlaggebend, dass ein Wälzlager oder ein Gleitlager statt eines Magnetlagers verwendet wird, obwohl das Magnetlager dem Wälzlager oder dem Gleitlager in Hinblick auf Verschleiß, Geräuschbildung oder erzielbare Rotationsgeschwindigkeiten typischerweise überlegen ist.

In der gattungsbildenden, internationalen Patentanmeldung WO 2009/021721 A2 ist ein Verfahren zur Lagerung von drehbaren Geräten, insbesondere eines medizinischen Scanners, mit einem Innenring und einem Außenring beschrieben. Dabei ist vorgesehen, dass Innenring und Außenring durch das magnetische Feld von Elektromagneten in axialer und/oder radialer Richtung berührungslos geführt werden und der Abstand zwischen ihnen mit Hilfe von Abstandssensoren kontrolliert und gesteuert wird. Bei einem Lager zur Durchführung dieses Verfahrens ist vorgesehen, dass der Außenring mehrteilig ausgeführt ist und im zusammengebauten Zustand einen u-förmigen nach innen offenen Querschnitt besitzt, in den der Innenring hinein ragt, und dass in den axial und radial gegenüberliegenden Bereichen von Innenring oder Außenring jeweils Elektromagnete und Abstandssensoren angeordnet sind.

In der deutschen Patentanmeldung DE 2 163 199 A1 wird ein mittenfreies Großlager für die Aufnahme von axialen, radialen und Momentenbelastungen beschrieben, wobei ein Vorsprung eines Nasenringes von einem zweiteiligen Tragring dreiseitig umfaßt ist. Der Tragring ist an seinen Lagerflächen mit am Umfang verteilt angeordneten, regelbaren Elektromagneten und der Nasenring ist mit am Umfang verteilt angeordneten, nicht regelbaren Elektromagneten versehen.

### Offenbarung der Erfindung

Es ist eine Aufgabe der vorliegenden Erfindung, ein Magnetlager zur Verfügung zu stellen, das bauraumsparend ausgestaltet ist und dessen Effizienz gegenüber denjenigen Magnetlagern aus dem Stand der Technik verbessert ist.

Die vorliegende Erfindung löst die Aufgabe durch ein Magnetlager mit den Merkmalen von Anspruch 1. Gegenüber dem Stand der Technik ist das Fanglager Bestandteil des Magnetlagers, indem es in den Außenring und den Innenring integriert ist. Dabei ist das Fanglager derart in den Innenring und Außenring integriert bzw. eingelassen, dass das Fanglager den Innenring bzw. Außenring entlang der axialen Richtung und der radialen Richtung auffangen kann, insbesondere wenn beispielsweise durch einen Stromausfall die Lagerung von Innenring und Außenring mittels der Axial- und Radialmagneten nicht mehr gewährleistet werden kann. Dadurch kann in vorteilhafter Weise auf einzelne Fangvorrichtungen verzichtet werden, die andernfalls zwischen dem Außenring und dem Innenring angeordnet werden müssten und jeweils für ein Abfangen entlang der radialen oder der axialen Richtung sorgen würden. Durch das integrierte Fanglager kann ein vom Innenring oder Außenring gebildeter Rotor, der um eine Drehachse drehbar gelagert ist, dabei sowohl in axialer als auch in radialer Richtung, d. h. entlang einer parallel und entlang einer senkrecht zur Drehachse verlaufenden Richtung, effektiv abgefangen werden, ohne dass das Fanglager zusätzlichen Bauraum in Anspruch nimmt.

Vorzugsweise bilden der Innenring und der Außenring als Lagerteil des Magnetlagers ein System aus einem Stator und einem um die Drehachse rotierenden Rotor. Insbesondere ist der Innenring der Stator und der Außenring der Rotor oder andersrum. Beispielsweise ist es für die Axialmagnete und Radialmagnete vorgesehen, dass der Innenring mehrere Axialmagnete, die entlang des Umfangs des Innenrings angeordnet sind, und/oder mehrere Radialmagnete, die entlang des Umfangs des Innenrings angeordnet sind, aufweist. Erfindungsgemäß ist es vorgesehen, dass das Fanglager im Randbereich des Innenrings und Außenrings angeordnet ist und weitgehend bündig mit der Oberfläche eines Grundkörpers des Innenrings oder Außenrings abschließt. Das Fanglager ist zumindest teilweise an einer zum Außenring zeigenden Kante des Innenrings angeordnet. Weiterhin ist es vorgesehen, dass die Axial- und Radialmagneten Elektromagneten umfassen. Insbesondere weisen die Elektromagneten jeweils eine Spule auf, die mit einer elektrischen Spannung zur Erzeugung des Magnetfeldes beaufschlagbar ist. Über das kontrollierte Beaufschlagen der Spule mit einer elektrischen Spannung lässt sich das von der Spule verursachte Magnetfeld kontrollieren. Insbesondere ist es vorgesehen, dass das Fanglager derart in den Innenring und Außenring integriert ist, dass es die für den Außenring und/oder den Innenring vorgesehene Schmiegung realisiert.

Vorteilhafte Ausgestaltungen und Weiterbildungen der Erfindung sind den Unteransprüchen sowie der Beschreibung unter Bezugnahme auf die Zeichnungen entnehmbar.

Erfindungsgemäß ist es vorgesehen, dass das Fanglager ein erstes Fanglagerteil und ein zweites Fanglagerteil umfasst, wobei das erste Fanglagerteil in den Innenring und das zweite Fanglagerteil in den Außenring integriert ist. Das erste Fanglagerteil und das zweite Fanglagerteil sind derart ausgestaltet, dass sich das erste Fanglagerteil und das zweite Fanglagerteil sowohl entlang der axialen Richtung als auch entlang der radialen Richtung gegenüberliegen. Dabei sind das erste Fanglagerteil und das zweite Fanglagerteil durch einen Zwischenraum, der zwischen dem Innenring und dem Außenring angeordnet ist, voneinander getrennt.

Weiterhin ist es vorstellbar, dass das erste Fanglagerteil und das zweite Fanglagerteil entlang ihrer Umfänge derart ausgestaltet sind, dass sie für die Schmiegung des Magnetlagers sorgen. Vorzugsweise ist vorgesehen, dass das erste Fanglagerteil oder das zweite Fanglagerteil einstückig ausgestaltet sind und sich entlang des gesamten Umfangs, beispielsweise entlang der gesamten Kante des Innenrings bzw. Außenrings, am Innenring bzw. Außenring erstrecken.

Gemäß einer weiteren Ausführungsform der vorliegenden Erfindung ist es vorgesehen, dass der Außenring mehrteilig ausgestaltet ist und im zusammengebauten Zustand eine nach innen offene Aussparung, in die der Innenring hineinragt, aufweist. Dadurch lässt sich in vorteilhafter Weise ein Magnetlager realisieren, bei dem der Außenring den Innenring umgreift. Dabei sind Teile des Außenrings durch Befestigungsmittel vorzugsweise lösbar miteinander verbunden. Insbesondere ist es vorgesehen, dass der Außenring, der Innenring und das integrierte Fanglager als rotationssymmetrische Ringe zur Bildung des Magnetlagers gestapelt sind.

Gemäß einer weiteren Ausführungsform der vorliegenden Erfindung ist es vorgesehen, dass das Fanglager eine Flusstrennung zur Entkopplung verschiedener Magnetkreise umfasst. Dabei gehen die verschiedenen Magnetfelder vorzugsweise von verschiedenen Magneten, insbesondere Elektromagneten, aus. Insbesondere ist die Flusstrennung zwischen einem der Axialmagneten und einem der Radialmagneten angeordnet. Dadurch lassen sich die Magnetfelder für ein radiales und ein axiales Anordnen der Lagerteile, d. h. des Innenrings bzw. des Außenrings, weitgehend unbeeinträchtigt vom benachbarten Magnetfeld einstellen.

Gemäß einer weiteren Ausführungsform der vorliegenden Erfindung ist es vorgesehen, dass durch die Wahl des Materials, aus dem das Fanglager gefertigt ist, das Fanglager eine Abschirmvorrichtung bildet, mit der sich die von den Axialmagneten und Radialmagneten ausgehenden verschiedenen Magnetfelder gegenseitig abschirmen lassen, wobei die Abschirmvorrichtung aus Aluminium, Austenit-Stahl, Bronze und/oder Keramik oder sonstigem nichtmagnetischem Material gefertigt ist. Durch die Nutzung von Aluminium, Austenit-Stahl, Bronze und/oder Keramik lassen sich die Magnetfelder besonders effektiv gegenseitig entkoppeln.

Gemäß einer weiteren Ausführungsform der vorliegenden Erfindung ist es vorgesehen, dass zur Ausrichtung der Magnetfelder die Axialmagnete und/oder Radialmagnete Polschuhe umfassen. Mit Hilfe der Polschuhe lässt sich das Magnetfeld, das jeweils von einer um den Polkern gewickelten

Spule erzeugt wird, gezielt ausrichten, wodurch sich die Verlustleistung des Magnetlagers in vorteilhafter Weise reduzieren lässt. Insbesondere ist es vorgesehen, dass die Polschuhe teilkreisförmig ausgestaltet sind. D. h. die Polschuhe sind vorzugsweise derart gebogen ausgestaltet, dass ihre Krümmung mit einem Radius des Innenrings oder des Außenrings abgestimmt ist. Vorzugsweise sind die Polschuhe entlang des Innenrings oder des Außenrings benachbart und einen Kreis formend zueinander angeordnet.

Gemäß einer weiteren Ausführungsform der vorliegenden Erfindung ist es vorgesehen, dass mehrere Axialmagnete oder Radialmagnete über einen einteilig oder zweiteilig ausgestalteten Polschuh miteinander verbunden sind. Dafür ist es vorzugsweise vorgesehen, dass die einteilig oder zweiteilig ausgestalteten Polschuhe Vorsprünge aufweisen, die jeweils einen Polkern für einen der Axialmagneten oder Radialmagneten bilden, indem die Vorsprünge von einer Spule umgeben bzw. umwickelt sind. Dadurch sind weniger für die Montage des Polschuhs notwendige Bohrungen erforderlich, was sich in vorteilhafter Weise auf die einzelnen Magnetfelder auswirkt. Insbesondere sind die zweiteiligen Polschuhe für das Verbinden mehrerer Radialmagneten und die einteiligen Polschuhe für das Verbinden mehrerer Axialmagneten vorgesehen. Weiterhin ist es vorgesehen, dass der zweiteilig ausgestaltete Polschuh aus zwei im Wesentlichen deckungsgleichen Polschuhhälften besteht, die im zusammengebauten Zustand den Polschuh bilden, über den die mehreren Axialmagneten oder Radialmagneten miteinander verbunden sind.

Gemäß einer weiteren Ausführungsform der vorliegenden Erfindung ist es vorgesehen, dass der einteilig ausgestaltete Polschuh einen im Wesentlichen teilkreisförmigen oder ringförmigen Grundkörper aufweist, wobei vom teilkreisförmigen oder ringförmigen Grundkörper mindestens ein Vorsprung absteht, wobei der Vorsprung zur Bildung eines Axialmagneten oder Radialmagneten von einer Spule umgeben ist. Dabei ist der Vorsprung vorzugsweise integraler Bestandteil des Axial- oder Radialmagneten. Insbesondere umfasst der einteilig ausgestaltete Polschuh für jeden Axialmagneten bzw. Radialmagneten jeweils einen Vorsprung. Insbesondere ist es vorstellbar, dass alle Axialmagnete über einen einzelnen gemeinsamen Polschuh miteinander verbunden sind. Durch die Ausgestaltung solcher gemeinschaftlicher Polschuhe lässt sich die Gesamtzahl an Bauteilen, die für die Bildung des Magnetlagers montiert werden müssen, reduzieren. Dies wirkt sich in vorteilhafter Weise auf die bei der Fertigung entstehenden Kosten aus und reduziert die Wahrscheinlichkeit dafür, dass nach dem Zusammensetzen des Magnetlagers einzelne Axial- und/oder Radialmagneten in unregelmäßigen Abständen zueinander angeordnet sind. Neben dieser Verbesserung hinsichtlich der Fertigungstoleranz wird mit abnehmender Zahl an Polschuhen auch die Zahl an Luftspalten zwischen einzelnen Polschuhen reduziert, was sich schließlich vorteilig auf die erzeugten Magnetfelder auswirkt. Insbesondere ist es vorgesehen, dass der einteilig oder zweiteilig ausgestaltete Polschuh aus dem ringförmigen Grundkörper gefertigt ist, indem die einzelnen Vorsprünge aus dem Grundkörper herausgefräst sind.

Gemäß einer weiteren Ausführungsform der vorliegenden Erfindung ist es vorgesehen, dass der zweiteilig ausgestaltete Polschuh im zusammengebauten Zustand den im Wesentlichen teilkreis- oder ringförmigen Grundkörper mit dem mindestens einen Vorsprung umfasst. Vorzugsweise umfasst der zweiteilige Polschuh zwei Polschuhhälften, die, vorzugweise entlang einer parallel zur Drehachse verlaufenden Richtung, zur Bildung des Polschuhs aufeinander angeordnet sind. Beispielsweise werden die Polschuhhälften von oben und unten an den Stator geschraubt. Insbesondere ist es, wie beim einteiligen Polschuh, vorgesehen, dass der Vorsprung zur Bildung eines Axial- oder Radialmagneten von einer Spule umgeben, insbesondere umwickelt ist. Es ist dabei bevorzugt vorgesehen, dass alle Radialmagneten über einen gemeinsamen Polschuh, der aus zwei Polschuhhälften gefertigt ist, miteinander verbunden sind. Weiterhin ist es vorgesehen, dass sich die Vorsprünge bei den Radialmagneten radial, vorzugsweise in Richtung eines Zentrums des Magnetlagers erstrecken und/oder sich die Vorsprünge für die Axialmagneten entlang einer im Wesentlichen parallel zur Drehachse verlaufenden Richtung erstrecken.

Gemäß einer weiteren Ausführungsform der vorliegenden Erfindung ist es vorgesehen, dass das Magnetlager Axialmagnete und Radialmagnete aufweist, die jeweils in gegenüberliegenden Bereichen des Innenrings oder des Außenrings angeordnet sind. Gemäß einer weiteren Ausführungsform der vorliegenden Erfindung ist es vorgesehen, dass am Außenring und/oder Innenring ein Luftkanal oder ein System aus Luftkanälen angeordnet ist. Insbesondere erstrecken sich die Luftkanäle entlang der Bereiche, in denen Axialmagnete und Radialmagnete angeordnet sind. Dabei sind die Luftkanäle zum Zwischenraum zwischen Innenring oder Außenring hin offen ausgestaltet. Vorzugsweise sind die Luftkanäle als Rillen, die beispielsweise entlang des Umfangs des Innenrings oder des Außenrings verlaufen, ausgebildet. Alternativ ist es vorstellbar, dass das Magnetlager statt eines Luftkanals ein Elektroblech aufweist. Diese Ausführungsform reduziert die rotatorischen Bremskräfte auf Grund der Wirbelströme bei schnell umlaufenden Rotoren.

Gemäß einer weiteren Ausführungsform der vorliegenden Erfindung ist es vorgesehen, dass das Fanglager eine Schmierungsbohrung aufweist. Mit Hilfe der Schmierungsbohrung lässt sich Schmiermittel in das Fanglager einlassen, ohne dass beispielsweise der Außenring demontiert werden muss.

Gemäß einer weiteren Ausführungsform der vorliegenden Erfindung ist es vorgesehen, dass die Axialmagnete und/oder die Radialmagnete individuell oder in Gruppen ansteuerbar sind. Dadurch lassen sich die Magnetfelder der Axialmagnete und der Radialmagnete in vorteilhafter Weise möglichst einfach steuern und kontrollieren. Insbesondere lassen sich die Magnetfelder im Betrieb, beispielsweise bei unerwarteten Abweichungen von einem Sollmagnetfeld, in vorteilhafter Weise ändern, insbesondere korrigieren, und beispielsweise so wählen, dass sie ein ausgefallenes Magnetfeld kompensieren. Weiterhin ist es vorgesehen, dass die Magnete individuell oder in Gruppen angesteuert werden, um den Rotor des Magnetlagers anzutreiben und gegenüber dem Stator zu lagern.

Gemäß einer weiteren Ausführungsform der vorliegenden Erfindung ist es vorgesehen, dass das Magnetlager eine Notstromversorgung, beispielsweise in Form eines Energiespeichers, wie einer Batterie, aufweist und/oder Axialmagnete zu einer passiven Notbremsschaltung verschaltet sind. Bei einer eventuell auftretenden Fehlfunktion können mit der Notbremsschaltung und/oder der Notstromversorgung effektive Gegenmaßnahmen getroffen werden, die verhindern, dass der Rotor aus dem Magnetlager herausgeschleudert wird.

Gemäß einer weiteren Ausführungsform der vorliegenden Erfindung ist es vorgesehen, dass das Magnetlager eine Sensorvorrichtung für eine Überwachung eines Abstandes zwischen dem Innenring und dem Außenring aufweist. Insbesondere wird dabei ein Magnetfeld bzw. eine Magnetfeldstärke von der Sensorvorrichtung gemessen. Denkbar ist beispielsweise, dass der Abstand zwischen dem Innenring und dem Außenring entlang einer parallel zur Drehachse und einer senkrecht zur Drehachse verlaufenden Richtung überwacht wird. Vorzugsweise wird zur Überwachung eine Spule, insbesondere eine Spule von einem der Radial- oder Axialmagneten, genutzt und mit deren Hilfe eine Feldänderung festgestellt, die wiederum zur Bestimmung einer Abstandsänderung herangezogen wird. Es ist aber auch vorstellbar, dass eine Hall-Sonde zur Bestimmung des Magnetfeldes bzw. zur Überwachung des Abstands genutzt wird. Durch die Messung des Magnetfeldes bei der Bestimmung des Abstandes zwischen Innenring und Außenring kann auf aufwendige zusätzliche Messvorrichtungen verzichtet werden. Stattdessen wird zur Messung dasjenige Magnetfeld genutzt, das ohnehin von den Axialmagneten und den Radialmagneten vom Magnetlager bereitgestellt wird.

Gemäß einer weiteren Ausführungsform der vorliegenden Erfindung ist vorgesehen, dass das Magnetlager redundante Sensorvorrichtungen, vorzugsweise im Luftkanal, aufweist. Dadurch kann bei einem Ausfall einer der Sensorvorrichtungen der Betrieb des Magnetlagers aufrecht gehalten werden.

Ein weiterer Gegenstand der vorliegenden Erfindung ist ein Verfahren zum Betrieb eines erfindungsgemäßen Magnetlagers, wobei die Axialmagneten und/oder die Radialmagneten derart angesteuert werden, dass ein minimaler Spalt zwischen dem Innenring und dem Außenring mit einer Spaltbreite unterhalb von 2 mm, vorzugsweise mit einer Spaltbreite zwischen 1.2 mm und 1.8 mm und besonders bevorzugt mit einer Spaltbreite von 1.5 mm gebildet wird.

Gegenüber dem Stand der Technik lassen sich die Axialmagnete und/oder die Radialmagnete beispielsweise gleichzeitig für eine Lagerung und für einen Antrieb nutzen. Insbesondere wird durch den besonders geringen Abstand zwischen Innenring und Außenring gewährleistet, dass das Magnetlager einen Wirkungsbereich der erzeugten Magnetfelder möglichst optimal ausnutzt. Hierbei gilt es zu berücksichtigen, dass mit zunehmendem Abstand vom Ursprung des Magnetfeldes die Magnetfeldstärke abnimmt. Dadurch lässt sich in vorteilhafter Weise der Antrieb für das Magnetlager in den Innenring und den Außenring integrieren. Dabei sind die Axial- und/oder Radialmagnete vorzugsweise Spulen, die durch die Beaufschlagung mit einer elektrischen Spannung ansteuerbar sind. Insbesondere ist es vorgesehen, dass zur Vermeidung von Losen in der Kraftkennlinie einzelne Spulen mit Aufbringen von Vorspannkraft angesteuert bzw. geregelt werden. Denkbar ist beispielsweise auch, dass der Außenring und/oder der Innenring durch einen asynchronen Linearantrieb betrieben werden. Weiterhin ist vorstellbar, dass zusätzlich zu dem asynchronen Linearantrieb durch den Betrieb der Axial- und/oder Radialmagneten zumindest teilweise eine für das kontaktlose Anordnen von Außenring und Innenring erforderliche Tragkraft bereitgestellt wird. Insbesondere lassen sich Axial-und/oder Radialmagnete, vorzugsweise eine Gruppe von Axial und/oder Radialmagneten, zumindest teilweise mit Wanderfeldern beaufschlagen. Gemäß einer weiteren Ausführungsform der vorliegenden Erfindung ist vorgesehen, dass die Axialmagneten und/oder Radialmagneten derart angesteuert werden, dass ein Sollwert für die Spaltbreite des minimalen Spalts zwischen Innenring und Außenring gehalten wird. Dem Fachmann ist dabei klar, dass damit gemeint ist, dass der Sollwert innerhalb eines Toleranzwertbereichs konstant gehalten wird. Mittels einer dafür vorgesehenen Regelschaltung ist es, z. B. bei einer potentiellen Unwucht, möglich, regulativ in den Betrieb des Magnetfeldlagers einzugreifen.

Gemäß einer weiteren Ausführungsform der vorliegenden Erfindung ist vorgesehen, dass bei einem Ausfall von einem der Axialmagnete, von einem der Radialmagnete oder einer der Sensorvorrichtungen der Betrieb des Magnetlagers aufrecht gehalten wird. Es ist dabei vorstellbar, dass der Betrieb gegebenenfalls mit einer reduzierten Leistung aufrecht gehalten wird.

Weitere Einzelheiten, Merkmale und Vorteile der Erfindung ergeben sich aus den Zeichnungen sowie aus der nachfolgenden Beschreibung von bevorzugten Ausführungsformen anhand der Zeichnungen. Die Zeichnungen illustrieren dabei lediglich beispielhafte Ausführungsform der in den Ansprüchen definierten Erfindung.

### Kurze Beschreibung der Figuren

Die Figur 1 zeigt in einer perspektivischen Ansicht jeweils einen Außenring und einen Innen- ring für ein Magnetlager gemäß einer beispielhaften Ausführungsform der vorliegenden Erfindung.
Die Figur 2 zeigt in einer Schnittansicht jeweils einen Außenring und einen Innenring für das Magnetlager gemäß der beispielhaften Ausführungsform der vorliegenden Erfindung.
Die Figur 3 zeigt das aus Innenring und Außenring zusammengesetzte Magnetlager gemäß der beispielhaften Ausführungsform der vorliegenden Erfindung in einer Schnittansicht (links) und in einer perspektivischen Ansicht (rechts).
Die Figur 4 zeigt Polschuhe für den Außenring oder den Innenring eines Magnetlagers gemäß der beispielhaften Ausführungsform der vorliegenden Erfindung.
Die Figur 5 zeigt eine Anordnung von Sensorvorrichtungen an dem Magnetlager gemäß der beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

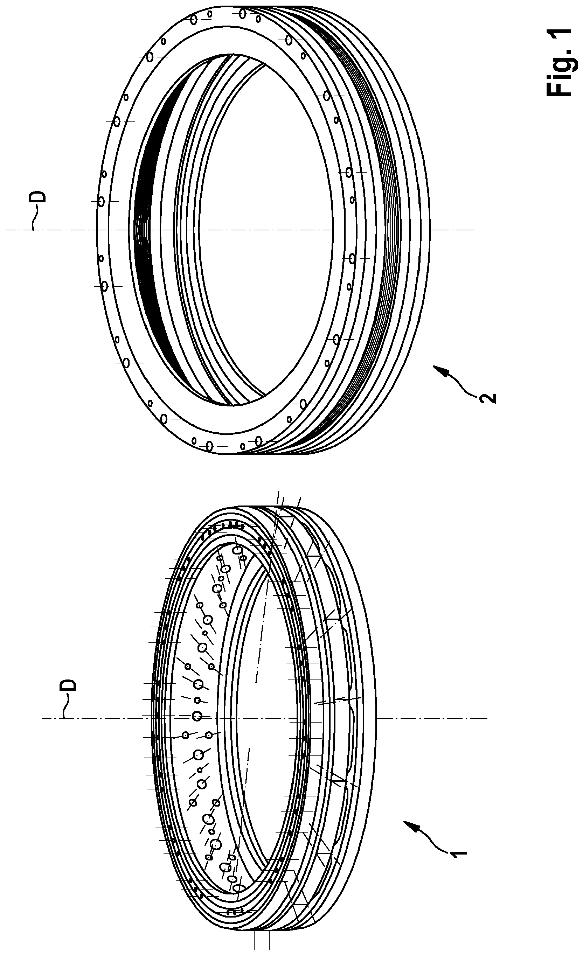

In Figur 1 ist auf der linken Seite ein Innenring 1 und auf der rechten Seite ein Außenring 2 eines Magnetlagers 10 gemäß einer beispielhaften Ausführungsform der vorliegenden Erfindung dargestellt. Es ist dabei vorgesehen, dass der Innenring 1 einen Stator und der Außenring 2 einen Rotor bildet. Denkbar ist auch, dass der Innenring den Rotor und der Außenring den Stator bildet Für das berührungslose Lagern des Innenrings 1 und des Außenrings 2 sind Axialmagnete 11 und Radialmagnete 12 vorgesehen, die Teil des Innenrings 1 oder des Außenrings^ sind. Insbesondere ist es vorgesehen, dass jeweils zwei Axialmagnete 11 in gegenüberliegenden Bereichen des Innenrings 1 oder Außenrings angeordnet sind und jeweils zwei Radialmagnete 12 in gegenüberliegenden Bereichen des Innenrings 1 oder des Außenrings angeordnet sind. Von den einzelnen Axial- bzw. Radialmagneten geht jeweils ein Magnetfeld aus, wodurch schließlich die berührungslose Anordnung und die Lagerung des Außenrings 2 gegenüber dem Innenring 1 realisiert wird. In der dargestellten Ausführungsform sind die Axialmagnete 11 und die Radialmagnete 12 am Innenring 1 angeordnet.

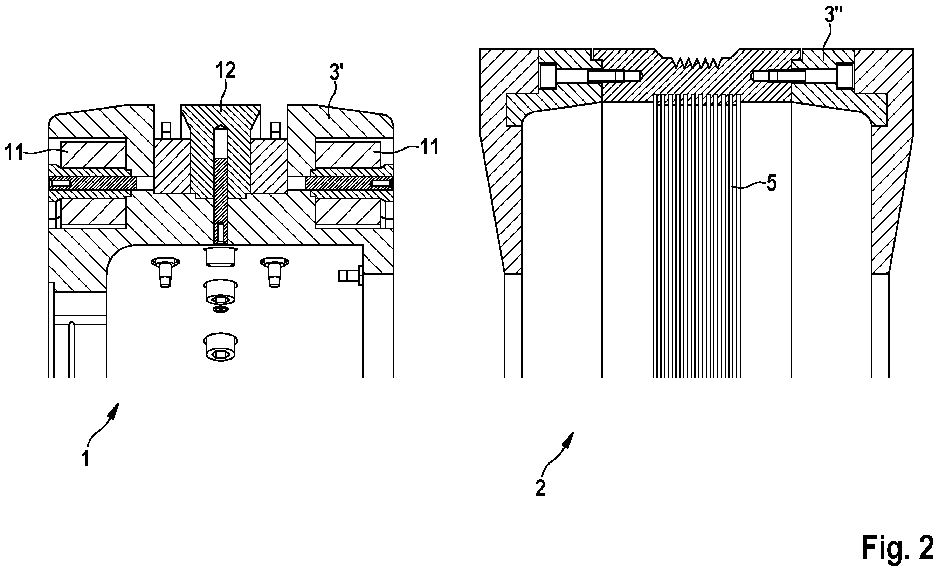

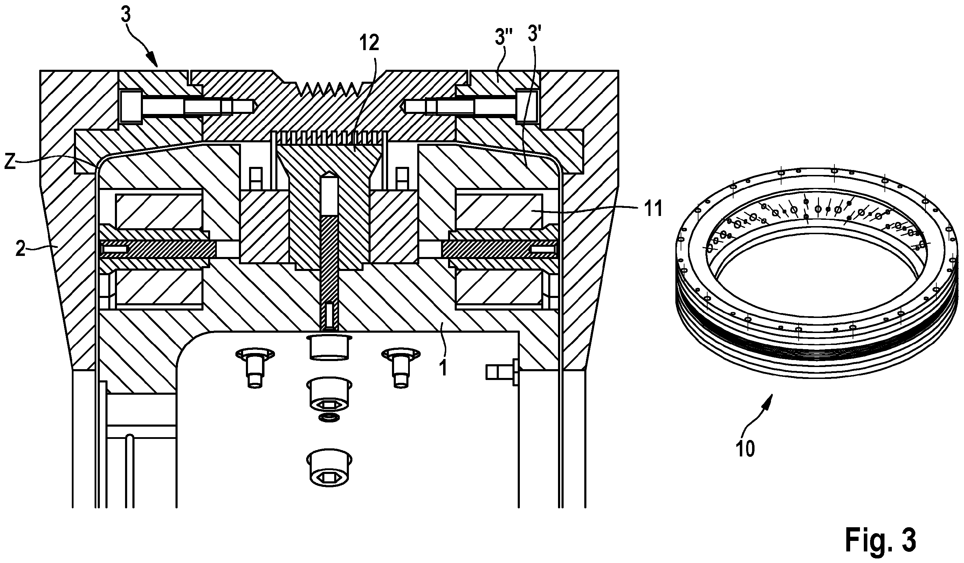

In Figur 2 ist jeweils in einer Schnittansicht auf der linken Seite der Innenring 1 und auf der rechten Seite der Außenring 2 des Magnetlagers 10 gemäß der beispielhaften Ausführungsform der vorliegenden Erfindung dargestellt. Das auf der linken Seite der Figur 3 dargestellte Magnetlager umfasst ein Fanglager 3, das im Fall eines Stromausfalles den Rotor fängt und so verhindert, dass ein andernfalls das Magnetlager 10 verlassender Rotor in seiner Umgebung Schäden verursacht. Das Fanglager 3 umfasst ein erstes Fanglagerteil 3' und ein zweites Fanglagerteil 3", wobei, wie in den Figuren 2 und 3 dargestellt, das erste Fanglagerteil 3' in den Innenring und das zweite Fanglagerteil 3" in den Außenring integriert ist. Dabei sind das erste Fanglagerteil 3' und das zweite Fanglagerteil 3" derart ausgestaltet, dass sie eine Schmiegung im Magnetlager realisieren. Vorzugsweise sind das erste und das zweite Fanglagerteil 3' und 3" jeweils entlang der einander gegenüberliegenden Seiten geschwungen ausgestaltet bzw. die Kanten abgerundet. Weiterhin ist es vorgesehen, dass das erste Fanglagerteil 3' und das zweite Fanglagerteil 3" entlang des Umfangs des Innenrings 1 bzw. des Außenrings 2 zwischen einem der Axialmagnete 11 und einem der Radialmagneten 12 angeordnet ist. Das erste Fanglagerteil 3' ist in einem Kantenbereich des Innenrings 1 angeordnet und das zweite Fanglagerteil 3" ist in einem Eckbereich des Außenrings 2 angeordnet. Dabei ist es bevorzugt vorgesehen, dass durch die Wahl des Materials, aus dem das Fanglager 3 gefertigt ist, das Fanglager 3 eine Abschirmvorrichtung bildet, mit der sich die von den unterschiedlichen Magneten, d. h. den Axialmagneten 11 und den Radialmagneten 12, ausgehenden verschiedenen Magnetfelder gegenseitig abschirmen lassen. Dadurch lassen sich in vorteilhafter Weise die Magnetfelder jeweils präziser einstellen, da beispielsweise mögliche und schwer einzuschätzende Überlagerungen im Wesentlichen unberücksichtigt bleiben können. Dabei ist es insbesondere vorgesehen, dass das Fanglager 3 aus Aluminium, Austenit-Stahl, Bronze und/oder Keramik gefertigt ist. Vorzugsweise umfasst das Fanglager 3 Schmierungsbohrungen, über die dem Fanglager 3 Schmiermittel mit einem vergleichsweise geringen Aufwand zugeführt werden kann. Für den auf der rechten Seite der Figur 2 dargestellten Außenring 2 ist es vorgesehen, dass er einen Luftkanal 5 bzw. ein System aus Luftkanälen aufweist.

In Figur 3 ist in einer Schnittansicht und in einer perspektivischen Ansicht ein aus dem Innenring 1 und dem Außenring 2 zusammengesetztes Magnetlager 10 gemäß der beispielhaften Ausführungsform der vorliegenden Erfindung dargestellt. Dabei ist es vorgesehen, dass der Außenring 2 mehrteilig ausgestaltet ist und im zusammengebauten Zustand eine nach innen offene Aussparung, in die der Innenring 1 hineinragt, aufweist. Dadurch umgreift der Außenring 2 den Innenring 1 an dessen Außenseite. Weiterhin ist es vorgesehen, dass der Abstand zwischen dem Außenring 2 und dem Innenring 1 im Wesentlichen weniger als 3 mm, vorzugsweise weniger als 2 mm, beträgt und besonders bevorzugt 1,5 mm beträgt. Insbesondere ist der Abstand zwischen dem Innenring 1 und dem Außenring 2 entlang eines Zwischenraums Z zwischen dem Innenring 1 und dem Außenring 2 im Wesentlichen konstant. Weiterhin ist es vorstellbar, dass das Magnetlager 10 über eine Notstromversorgung verfügt, die bei einem Ausfall einer regulären Stromversorgung diese ersetzt.

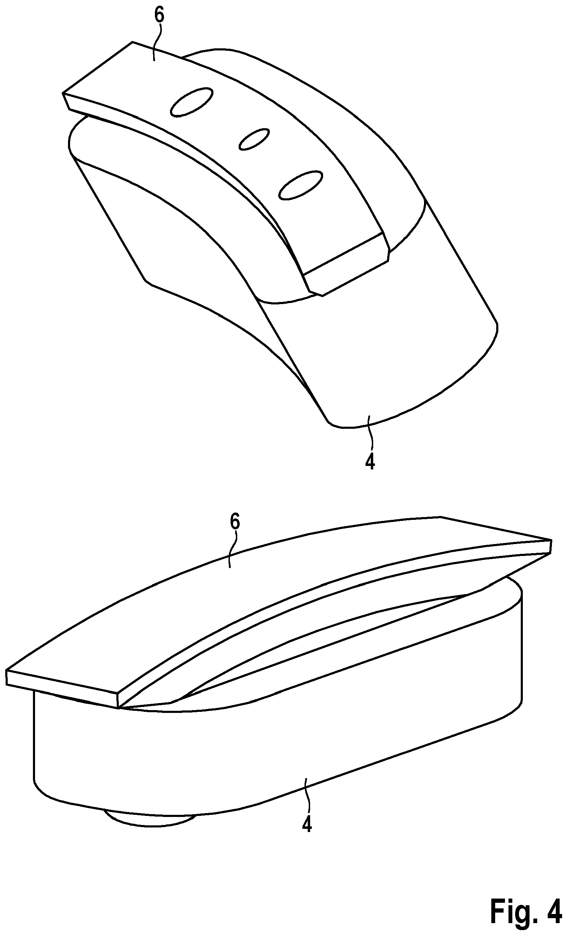

In Figur 4 sind ein Axialmagnet 11 und ein Radialmagnet 12 dargestellt, die zur Bildung des Magnetlagers 10 gemäß der beispielhaften Ausführungsform des Magnetlagers geeignet sind, wobei auf der Figur oben ein Axialmagnet 11 und unten ein Radialmagnet 12 illustriert ist. Dabei umfasst sowohl der dargestellte Axialmagnet 11 als auch der Radialmagnet 12 einen Polschuh 6, der zumindest teilweise, insbesondere entlang seines Umfangs, von einer Spule 4 umgeben ist. Durch die Verwendung des Polschuhs 6 lässt sich die Ausrichtung des jeweiligen Magnetfeldes erleichtern, wodurch schließlich die magnetische Lagerung von Innenring 1 und Außenring 2 weiter verbessert wird. Weiterhin ist es vorgesehen, dass der Polschuh 6 geschwungen bzw. gewölbt ist, insbesondere teilkreisförmig bzw. segmentförmig ausgestaltet ist. Vorzugsweise ist es dabei vorgesehen, dass die Wölbung mit einem Radius des Innenrings 1 oder des Außenrings 2 abgestimmt ist und sich durch das Aneinanderreihen mehrerer segmentförmiger Polschuhe 6 mit jeweiliger Spule der Außenring 2 oder der Innenring 1 ausbildet.

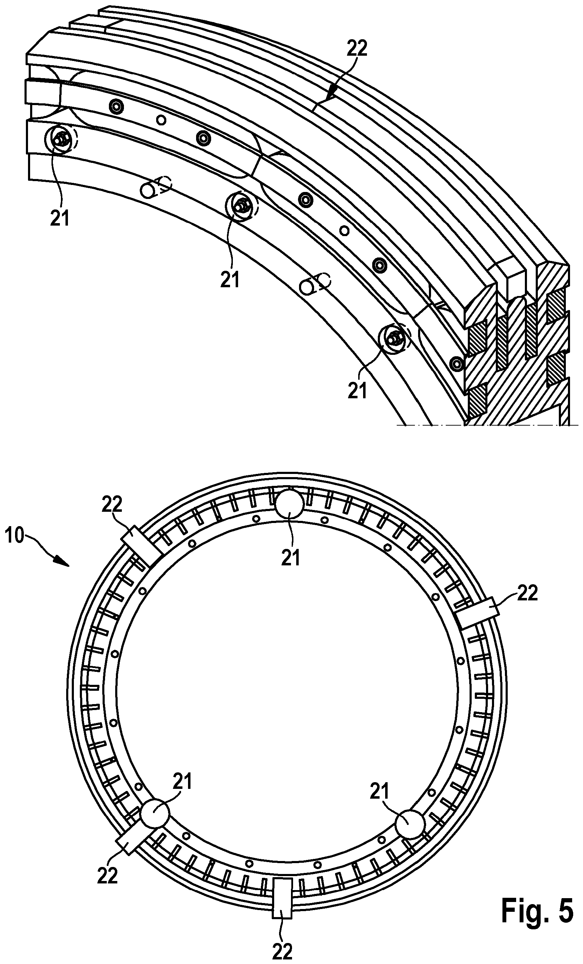

In Figur 5 ist eine Anordnung von Sensorvorrichtungen für ein Magnetlager 10 gemäß der beispielhaften Ausführungsform der vorliegenden Erfindung dargestellt. Es ist dabei vorgesehen, dass das Magnetlager 10 Axialmagnetsensoren 21 und Radialmagnetsensoren 22 aufweist, die vorzugsweise umlaufend im Luftkanal 5 integriert sind. Insbesondere sind die Axialmagnetsensoren 21 in einem regelmäßigen Abstand umlaufend am Magnetlager 10 angeordnet. Beispielsweise weist ein von einem Lagermittelpunkt aus gesehener Winkel zwischen zwei Axialmagnetsensoren 21 einen Wert von etwa 22.5° auf. Es ist aber auch vorstellbar, dass die Sensorvorrichtungen, insbesondere redundante Sensorvorrichtungen, umlaufend in unregelmäßigen Abständen angeordnet sind. Insbesondere ist es vorgesehen, dass die Sensorvorrichtungen an solchen Positionen angeordnet sind, an denen für eine mögliche Eigenfrequenz des Magnetlagers 10 möglichst hohe Amplituden zu erwarten sind. Weiterhin ist es vorstellbar, dass die Axialmagnetsensoren 21 und/oder die Radialmagnetsensoren 22, insbesondere auf den Axialmagneten 11 bzw. den Radialmagneten 12, verklebt oder am Innenring 1 bzw. am Außenring 2 verschraubt werden. Darüber hinaus ist es vorstellbar, dass redundante Sensorvorrichtungen verbaut werden, um den Betrieb des Magnetlagers 10 auch bei einem Ausfall einer Sensorvorrichtung in einem adäquaten Umfang aufrechtzuhalten. Vorzugsweise wird durch eine gezielt redundante Anordnung der Sensorvorrichtungen die Position des Innenrings 1 bzw. des Außenrings 2 doppelt abgesichert, insbesondere wenn das Magnetlager 10 bei einer vergleichsweise ungünstigen Eigenfrequenz betrieben wird. Ein Beispiel für eine redundante Anordnung von Axialmagnetsensoren 21 und Radialmagnetsensoren 22 ist am auf der Figur 5 oben gezeigten Magnetlager gezeigt.

### Bezugszeichenliste

1 Innenring
2 Außenring
3 Fanglager
3' erstes Fanglagerteil
3" zweites Fanglagerteil
4 Spule
5 Luftkanäle
6 Polschuhe
10 Magnetlager
1 1 Axialmagnet
12 Radialmagnet
21 Axialspulensensor
22 Radialspulensensor
D Drehachse
Z Zwischenraum

## Patentansprüche

1. Magnetlager (10) aufweisend einen Innenring (1) und einen konzentrisch zum Innenring (1) angeordneten Außenring (2), wobei der Innenring (1) und der Außenring (2) mittels Axial- und Radialmagneten (11, 12) drehbar zueinander gelagert sind, wobei das Magnetlager (10) ein Fanglager (3) aufweist, welches ein erstes Fanglagerteil (3') und ein zweites Fanglagerteil (3") umfasst, wobei das zweite Fanglagerteil (3") in den Außenring (2) integriert ist, **dadurch gekennzeichnet, dass** das erste Fanglagerteil (3') in den Innenring (1) integriert ist, wobei das erste Fanglagerteil (3') und das zweite Fanglagerteil (3") derart ausgestaltet sind, dass sich das erste Fanglagerteil (3') und das zweite Fanglagerteil (3") sowohl entlang der axialen Richtung als auch entlang der radialen Richtung gegenüberliegen.

2. Magnetlager (10) gemäß Anspruch 1, wobei der Außenring (2) mehrteilig ausgestaltet ist und im zusammengebauten Zustand eine nach innen offene Aussparung, in den der Innenring (1) hineinragt, aufweist.

3. Magnetlager (10) gemäß einem der vorhergehenden Ansprüche, wobei das Fanglager (3) eine Flusstrennung zum gegenseitigen Entkoppeln verschiedener Magnetkreise umfasst.

4. Magnetlager (10) gemäß Anspruch 3, wobei durch die Wahl des Materials, aus dem das Fanglager (3) gefertigt ist, das Fanglager (3) eine Abschirmvorrichtung bildet, mit der sich die von den Axialmagneten (11) und Radialmagneten (12) ausgehenden verschiedenen Magnetfelder gegenseitig abschirmen lassen, wobei die Abschirmvorrichtung (3) aus Aluminium, Austenit-Stahl, Bronze und/oder Keramik gefertigt ist.

5. Magnetlager (10) gemäß einem der vorhergehenden Ansprüche, wobei zur Ausrichtung der Magnetfelder die Axial- und Radialmagnete (11, 12) einen Polschuh (6) umfassen.

6. Magnetlager (10) gemäß Anspruch 5, wobei mehrere Axialmagnete (11) oder Radialmagnete (12) über einen einteilig oder zweiteilig ausgestalteten Polschuh (6) miteinander verbunden sind.

7. Magnetlager (10) gemäß Anspruch 6, wobei der einteilig ausgestaltete Polschuh einen im Wesentlichen teilkreisförmigen oder ringförmigen Grundkörper aufweist, wobei vom teilkreisförmigen oder ringförmigen Grundkörper mindestens ein Vorsprung absteht, wobei der Vorsprung zur Bildung eines Axialmagneten (11) oder Radialmagneten (12) von einer Spule (4) umgeben ist.

8. Magnetlager (10) gemäß Anspruch 6, wobei der zweiteilig ausgestaltete Polschuh im zusammengebauten Zustand den im Wesentlichen teilkreis- oder ringförmigen Grundkörper mit dem mindestens einen Vorsprung umfasst.

9. Magnetlager (10) gemäß einem der vorhergehenden Ansprüche, wobei am Außenring (2) und/oder Innenring (1) ein Luftkanal (5) oder ein System aus Luftkanälen angeordnet ist.

10. Magnetlager (10) gemäß einem der vorhergehenden Ansprüche, wobei die Axialmagnete (11) und/oder die Radialmagnete (12) individuell oder in einer Gruppe ansteuerbar sind.

11. Magnetlager (10) gemäß einem der vorhergehenden Ansprüche, wobei das Magnetlager (10) eine Notstromversorgung aufweist und/oder Axialmagnete (11) zu einer passiven Notbremsschaltung verschaltet sind.

12. Magnetlager (10) gemäß einem der vorhergehenden Ansprüche, wobei das Magnetlager (10) redundante Sensorvorrichtungen (21, 22) aufweist.

13. Verfahren zum Betrieb eines Magnetlagers (10) gemäß einem der vorhergehenden Ansprüche, **dadurch gekennzeichnet, dass** die Axialmagneten (11) und/oder die Radialmagneten (12) derart angesteuert werden, dass ein minimaler Spalt zwischen dem Innenring (1) und dem Außenring (2) mit einer Spaltbreite unterhalb von 2 mm, vorzugsweise mit einer Spaltbreite zwischen 1.2 mm und 1.8 mm und besonders bevorzugt mit einer Spaltbreite von 1.5 mm gebildet wird.

14. Verfahren gemäß Anspruch 13, wobei die Axialmagneten (11) und/oder Radialmagneten (12) derart angesteuert werden, dass ein Sollwert für die Spaltbreite des minimalen Spalts zwischen Innenring (1) und Außenring (2) gehalten wird.

15. Verfahren gemäß Anspruch 13 oder 14, wobei bei einem Ausfall von einem der Axialmagnete (11), von einem der Radialmagnete (12) oder einer der Sensorvorrichtungen (21, 22) der Betrieb des Magnetlagers (10) aufrecht gehalten wird.

## Claims

1. A magnetic bearing (10), which has an inner ring (1) and an outer ring (2) arranged concentric to the inner ring (1), wherein the inner ring (1) and the outer ring (2) are mounted rotatably relative to each other by means of axial and radial magnets (11, 12), wherein the magnetic bearing (10) has a back-up bearing (3) with a first back-up bearing part (3') and a second back-up bearing part (3"), wherein the second back-up bearing part (3") is integrated into the outer ring (2), **characterized in that** the first back-up bearing part (3') is integrated into the inner ring (1), wherein the first back-up bearing part (3') and the second back-up bearing part (3") are designed in such a way that the first back-up bearing part (3') and the second back-up bearing part (3") lie opposite each other both along the axial direction and along the radial direction.

2. The magnetic bearing (10) as claimed in claim 1, wherein the outer ring (2) is configured multipiece and in assembled state has a recess open towards the inside, into which the inner ring (1) protrudes.

3. The magnetic bearing (10) as claimed in claim 2, wherein the back-up bearing (3) comprises a flux separation for mutual decoupling of different magnetic circuits.

4. The magnetic bearing (10) as claimed in claim 3, wherein, by the choice of the material from which the back-up bearing (3) is made of, the back-up bearing (3) forms a shielding device, with which the different magnetic fields generated by the axial magnets (11) and the radial magnets (12) can be mutually shielded against each other, wherein the shielding device (3) is made of aluminum, austenitic steel, bronze and/or ceramic.

5. The magnetic bearing (10) as claimed in any of the preceding claims, wherein the axial and radial magnets (11, 12) comprise a pole shoe (6) for orientation of the magnetic fields.

6. The magnetic bearing (10) as claimed in claim 5, wherein several axial or radial magnets (11, 12) are connected together via a one-piece or two-piece pole shoe (6).

7. The magnetic bearing (10) as claimed in claim 6, wherein the one-piece pole shoe has a substantially annular or partially circular base body, wherein at least one protrusion protrudes from the annular or partially circular base body, wherein the protrusion is surrounded by a coil (4) to form an axial or radial magnet (11, 12).

8. The magnetic bearing (10) as claimed in one of claims 6, wherein the two-piece pole shoe in assembled state surrounds the substantially annular or partially circular base body with the at least one protrusion.

9. The magnetic bearing (10) as claimed in any of the preceding claims, wherein an air channel (5) or a system of air channels is arranged on the outer ring (2) and/or the inner ring (1).

10. The magnetic bearing (10) as claimed in any of the preceding claims, wherein the axial magnets (11) and/or the radial magnets (12) can be actuated individually or in a group.

11. The magnetic bearing (10) as claimed in any of the preceding claims, wherein the magnetic bearing (10) has an emergency power supply and/or axial magnets (11) are connected to form a passive emergency braking circuit.

12. The magnetic bearing (10) as claimed in any of the preceding claims, wherein the magnetic bearing (10) comprises redundant sensor devices (21, 22).

13. A method for operating a magnetic bearing (10) as claimed in any of the preceding claims, **characterized in that** the axial magnets (11) and/or the radial magnets (12) are actuated such that a minimum gap is formed between the inner ring and the outer ring with a gap width of less than 2 mm, preferably with a gap width between 1.2 mm and 1.8 mm, and particularly preferably with a gap width of 1.5 mm.

14. The method as claimed in claim 13, wherein the axial magnets and/or radial magnets are actuated such that a nominal value is maintained for the width of the minimal gap between the inner ring (1) and the outer ring (2).

15. The method as claimed in claim 13 or 14, wherein on failure of one of the axial magnets (11), one of the radial magnets (12) or one of the sensor devices (21, 22), operation of the magnetic bearing is maintained.

## Revendications

1. Palier magnétique (10) comportant une bague intérieure (1) et une bague extérieure (2) disposées concentriquement à la bague intérieure (1), dans lequel la bague intérieure (1) et la bague extérieure (2) sont montées rotatives l'une par rapport à l'autre au moyen d'aimants axiaux et radiaux (11, 12), dans lequel le palier magnétique (10) comporte un palier d'appui (3) avec une première partie de palier d'appui (3') et une deuxième partie de palier d'appui (3"), dans lequel la deuxième partie de roulement de secours (3") est intégrée dans la bague extérieure (2), **caractérisé en ce que** la première partie de roulement de secours (3') est intégrée dans la bague intérieure (1), dans lequel la première partie de roulement de secours (3') et la deuxième partie de roulement de secours (3") sont conçues de telle sorte que la première partie de roulement de secours (3') et la deuxième partie de roulement de secours (3") se trouvent l'une en face de l'autre à la fois le long de la direction axiale et le long de la direction radiale.

2. Le palier magnétique (10) selon la revendication 1, dans lequel la bague extérieure (2) est configurée en plusieurs pièces et, à l'état assemblé, présente une cavité ouverte vers l'intérieur, dans laquelle la bague intérieure (1) fait saillie.

3. Palier magnétique (10) selon la revendication 2, dans lequel le palier de secours (3) comprend une séparation de flux pour le découplage mutuel de différents circuits magnétiques.

4. Le palier magnétique (10) selon la revendication 3, dans lequel, par le choix du matériau du palier d'appui (3), le palier d'appui (3) forme un dispositif de blindage, avec lequel les différents champs magnétiques générés par les aimants axiaux (11) et les aimants radiaux (12) peuvent être mutuellement protégés l'un contre l'autre, dans lequel le dispositif de blindage (3) est en aluminium, en acier austénitique, en bronze et/ou en céramique.

5. Le palier magnétique (10) selon l'une quelconque des revendications précédentes, dans lequel les aimants axiaux et radiaux (11, 12) comportent un patin polaire (6) pour l'orientation des champs magnétiques.

6. Le palier magnétique (10) selon la revendication 5, dans lequel plusieurs aimants axiaux ou radiaux (11, 12) sont reliés entre eux par l'intermédiaire d'un sabot polaire (6) en une ou deux parties.

7. Palier magnétique (10) selon la revendication 6, dans lequel le patin polaire monobloc a un corps de base sensiblement annulaire ou partiellement circulaire, dans lequel au moins une protubérance fait saillie du corps de base annulaire ou partiellement circulaire, dans lequel la protubérance est entourée d'une bobine (4) pour former un aimant axial ou radial (11, 12).

8. Palier magnétique (10) selon l'une des revendications 6, dans lequel le patin polaire en deux parties, à l'état assemblé, entoure le corps de base sensiblement annulaire ou partiellement circulaire avec au moins une protubérance.

9. Palier magnétique (10) selon l'une quelconque des revendications précédentes, dans lequel un canal d'air (5) ou un système de canaux d'air est disposé sur la bague extérieure (2) et/ou la bague intérieure (1).

10. Le palier magnétique (10) selon l'une des revendications précédentes, dans lequel les aimants axiaux (11) et/ou les aimants radiaux (12) peuvent être actionnés individuellement ou en groupe.

11. Le palier magnétique (10) selon l'une quelconque des revendications précédentes, dans lequel le palier magnétique (10) possède une alimentation électrique de secours et/ou des aimants axiaux (11) sont connectés pour former un circuit de freinage d'urgence passif.

12. Palier magnétique (10) selon l'une des revendications précédentes, dans lequel le palier magnétique (10) comprend des dispositifs de capteurs redondants (21, 22).

13. Procédé de fonctionnement d'un palier magnétique (10) selon l'une quelconque des revendications précédentes, **caractérisé en ce que** les aimants axiaux (11) et/ou les aimants radiaux (12) sont actionnés de manière à former un espace minimum entre la bague intérieure et la bague extérieure avec une largeur d'espace inférieure à 2 mm, de préférence avec une largeur d'espace comprise entre 1,2 mm et 1,8 mm, et de manière particulièrement préférée avec une largeur d'espace de 1,5 mm.

14. Procédé selon la revendication 13, dans lequel les aimants axiaux et/ou les aimants radiaux sont actionnés de manière à maintenir une valeur nominale pour la largeur de l'espace minimal entre l'anneau intérieur (1) et l'anneau extérieur (2).

15. Méthode selon la revendication 13 ou 14, dans laquelle le fonctionnement du palier magnétique est maintenu en cas de défaillance de l'un des aimants axiaux (11), de l'un des aimants radiaux (12) ou de l'un des dispositifs de détection (21, 22).
